# EUROPEAN PATENT APPLICATION

(11) **EP 3 275 825 A1**
(43) Date of publication of application: **31.01.2018**
(21) Application number: 17184119.0
(22) Date of filing: 31.07.2017
(51) Int. Cl.: B66B 25/00

(54) **TEMPERATURE MONITORING SYSTEM, PASSENGER CONVEYOR AND TEMPERATURE MONITORING METHOD THEREOF**

(30) Priority: 29.07.2016 CN 201610610011
(71) Applicant: Otis Elevator Company, Farmington CT 06032 (US)
(72) Inventor: CHEN, Yanying, Guangzhou, Guangdong 510425 (CN); HU, Zhaoxia, Hangzhou, Zhejiang 310019 (CN); FUCHS, Wilfrid, 2103 Langenzersdorf - Niederösterrreich (AT); SENGER, Alois, 3264 Gresten (AT); FANG, Hui, Pu Dong New Area, Shanghai 201204 (CN); JIA, Zhen, Pudong New Area, Shanghai 201204 (CN); ZHAO, Jianwei, Pu Dong District, Shanghai 201206 (CN); LI, Qiang, Pu Dong District, Shanghai 201206 (CN); SU, Anna, Pudog New Area, Shanghai 201203 (CN)
(74) Representative: Ramsay, Laura Anne

(57) **Abstract**

The present invention provides a temperature monitoring system for a passenger transport apparatus, a passenger transport apparatus having the same and a temperature monitoring method for a passenger transport apparatus, wherein the temperature monitoring system comprises: a temperature detection apparatus (28, 29); and a control apparatus (27) associated with the temperature detection apparatus (28, 29). When the temperature of at least one of a plurality of components is lower than a corresponding working temperature range, the control apparatus sends out a notification message and/or enables a heating apparatus to heat the component; when the temperature of at least one of the plurality of components reaches an early warning temperature range, the control apparatus sends out a notification message and/or enables a heat dissipation apparatus to dissipate heat for the component; and when the temperature of at least one of the plurality of components continues to rise and exceeds the corresponding working temperature range, the control apparatus sends out a notification message and/or enables the passenger transport apparatus to brake. The present invention is able to monitor a component running condition and predict a component service life, thereby taking a corresponding measure in advance.

## Description

### Technical field

The present invention relates to the technical field of passenger transport apparatus monitoring and maintenance, and in particular, the present invention relates to a temperature monitoring system for a passenger transport apparatus, a passenger transport apparatus having the same and a temperature monitoring method therefor. The passenger transport apparatus comprises an automatic escalator and a moving walkway.

### Background

In a passenger transport apparatus, such as an automatic escalator and a moving walkway, it is crucial that components are running normally. Since any component failure may possibly result in a failure of the automatic escalator, or even result in a security accident, it is desired to monitor component running conditions in real time, and predict a component service life and take a precautionary measure in advance, so as to avoid a failure of a component in running and an accident caused thereby.

In a passenger transport apparatus, such as an automatic escalator and a moving walkway, due to an environmental change or a large load, an important component may possibly run in a condition which is not suitable for its running, which thus affects the service life thereof. For example, with regard to an automatic escalator provided outside, due to environmental factors, components may possibly be caused to expose at an excessively high or excessively low temperature in a long time. In addition, some components, for example, a drive component, of the automatic escalator may be in long-term overheating resulted from an excessively large load. No matter running in an excessively hot or excessively cold environment, the service life of a component of the passenger transport apparatus may possibly be affected, and once the component is damaged, it then means that a failure of the passenger transport apparatus may be caused, or even an accident may occur and result in casualties, etc. In general conditions, such a potential threat cannot be detected easily.

### Summary

An objective of the present invention is to solve or at least partially alleviate the problem or defect existing in the prior art.

In order to achieve the above objective, according to one aspect of the present invention, a temperature monitoring system for a passenger transport apparatus is provided, comprising:
a temperature detection apparatus, configured to detect the temperatures of a plurality of components of the passenger transport apparatus in a contactless manner; and
a control apparatus associated with the temperature detection apparatus, the control apparatus being configured to remotely monitor temperature information about a plurality of components collected by the temperature detection apparatus.

One or more examples of such a system are provided by claims 2 to 10.

According to other aspects of the present invention, a passenger transport apparatus having the temperature detection apparatus above and a temperature monitoring method for a passenger transport apparatus are further provided.

One or more examples of such a method are provided by claims 13 to 15.

### Brief description of the accompanying drawings

With reference to the accompanying drawings, the above and other features of the present invention will become apparent, in which:
Fig. 1 shows a perspective view of an automatic escalator according to an embodiment of the present invention;
Fig. 2 shows a side view at one end of the automatic escalator in Fig. 1; and
Fig. 3 shows a flow chart of a temperature monitoring method for a passenger transport apparatus according to an embodiment of the present invention.

### Detailed description of preferred embodiments

It would be easy to be understood that those of ordinary skills in the art may propose a plurality of interchangeable structural modes and implementation methods according to the technical solution of the present invention without changing the essential spirit of the present invention. Therefore, the following specific embodiments and accompanying drawings are merely exemplary description of the technical solution of the present invention, and should not be deemed as all of the present invention or deemed as limitations or restrictions to the technical solution of the present invention.

The positional terms of up, down, left, right, before, behind, front, back, top, bottom, etc. which are referred to or possibly referred to in the present description are defined with respect to the construction shown in the various figures, and they are relative concepts; therefore, they may possibly change correspondingly according to different positions thereof and different use states. Hence, these and other positional terms should also not be construed as restrictive terms.

In the present invention, a passenger transporter comprises an automatic escalator and a moving walkway.

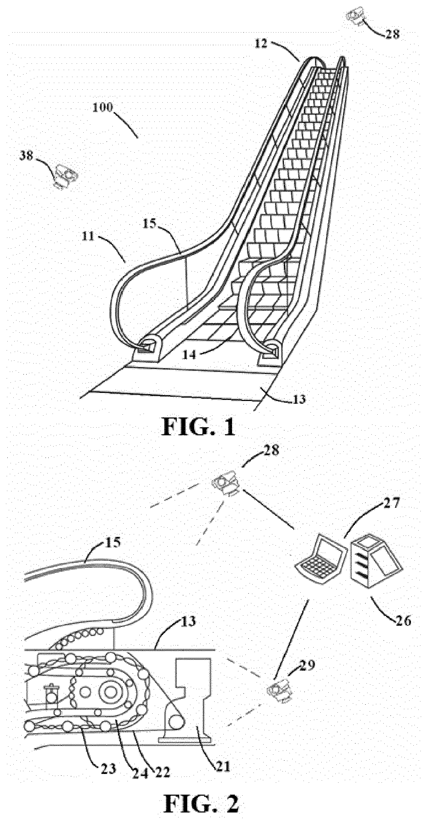

First refer to Fig. 1, which shows an automatic escalator 100 according to an embodiment of the present invention. It should be understood that although the automatic escalator 100 is taken as an example, the temperature monitoring system, the temperature monitoring method, etc. of the present invention may also be applied to other types of passenger transport apparatuses, for example, widely applied to moving walkways of a hypermarket or an airport, etc. With regard to the automatic escalator 100, the general function thereof is to automatically transmit passengers between a lower floor and an upper floor. The automatic escalator 100 in Fig. 1 has a lower end 11 and an upper end 12, which are respectively located at a lower floor and an upper floor. The automatic escalator has a step tread 14 and handrails at two sides of the step tread 14. When the automatic escalator 100 is running, the step tread 14 and handrail belts 15 on the handrails continuously move cyclically in one direction. A drive unit, a transmission unit, etc. of the automatic escalator 100 are distributed at two ends of the automatic escalator, and are located below a cover plate 13 and are invisible due to the coverage of the cover plate 13. It should be understood that a corresponding cover plate and a plurality of components located below the cover plate are also provided at the upper end of the automatic escalator 100. As shown in the figure, temperature detection apparatuses 28 and 38 are respectively arranged near the top of the upper end and lower end of the automatic escalator.

Then refer to Fig. 2, which shows a side view of the upper end 12 of the automatic escalator 100 in Fig. 1, where some components below the cover plate 13 are shown. The first temperature detection apparatus 28 and the second temperature detection apparatus 29 of the temperature monitoring system according to an embodiment of the present invention are provided at the upper end of the automatic escalator 100. Although not shown, according to other embodiments of the present invention, the temperature detection apparatus may likewise be arranged at the lower end of the automatic escalator 100, or the temperature detection apparatus may be arranged according to practical requirements. The temperature detection apparatus is able to collect the temperatures of a plurality of components in a contactless manner. For example, the first temperature detection apparatus 28 is able to detect the surface temperatures of various components above the cover plate 13, which components comprise but are not limited to the cover plate 13, the handrail belt 15 and the step tread, etc., while the second temperature detection apparatus 29 is able to detect the surface temperatures of various components below the cover plate 13, for example, in the embodiment shown in the figure, the second temperature detection apparatus 29 is mainly configured to detect the surface temperature of a drive unit 21. In other embodiments, the second temperature detection apparatus 29 may be provided at other positions, for example, provided at a side of a transmission system to detect the surface temperatures of a transmission belt 22, a transmission chain 23 and a driving chain wheel 24, etc. It should be understood that the arrangement positions of the temperature detection apparatuses are not limited to the positions shown in the figure, and they can also be configured to detect the surface temperatures of a plurality of other components, wherein the plurality of other components comprise but are not limited to components in a drive unit, a transmission system or a control system or any other components on which temperature monitoring is desired to be performed.

The various temperature detection apparatuses 28 and 29 are respectively associated with a control apparatus 27, for example, in a wireless or wired communication connection, so that the control apparatus 27 remotely monitors temperature data collected by the temperature detection apparatuses and takes a corresponding measure, wherein when the temperature of at least one of the plurality of components is lower than a corresponding working temperature range, the control apparatus 27 may control to send out a notification message so as to remind working staff to contrive heating the component (for example, by means of utilizing an air conditioner, etc.), or when the passenger transport apparatus has a heating apparatus, the control apparatus 27 may directly control the heating apparatus to heat the component; in addition, when the temperature of at least one of the plurality of components reaches a corresponding early warning temperature range, the control apparatus 27 sends out a notification message so as to remind working staff to contrive dissipating heat for the component, or when the passenger transport apparatus has a heat dissipation apparatus such as an exhaust air apparatus, the control apparatus 27 may directly control the exhaust air apparatus to dissipate heat for the component; moreover, when the temperature of at least one of the plurality of components continues to rise and exceeds the corresponding working temperature range, the control apparatus 27 may control to send out a notification message to notify management staff on the site to take actions, or for example, when the temperature continuously rises and cannot be controlled, directly enable the passenger transport apparatus to brake. It should be understood that the respective working temperature ranges, early warning temperature ranges and pre-determined temperature values of the plurality of components can all be set according to experience or based on analysis of temperature data, where the working temperature range generally comprises a working temperature upper limit and a working temperature lower limit, and the early warning temperature range is generally set to approach the working temperature upper limit. With regard to different components, there may be different working temperature ranges and early warning temperature ranges.

It should be understood that in any embodiments, the temperature detection apparatus may be integrated together with an imaging sensor and/or depth sensing sensor, so as to achieve other monitoring functions. More particularly, with regard to the first temperature detection apparatus 28, it may be any contactless temperature detection apparatus, for example, an infra-red-based temperature detection apparatus or an imaging sensor and/or depth sensing sensor integrated with a temperature detection apparatus. In some embodiments, the first temperature detection apparatus 28 may be an infra-red thermal imager. With regard to the second temperature detection apparatus 29, since it is located below the cover plate 13, it is preferably an infra-red thermal imager which is able to work in a condition of no light. In the case where the temperature detection apparatus is constituted by an infra-red thermal imager, the temperature detection apparatus may detect the surface temperature of one region, and form a thermal infra-red image, and various positions in the thermal infra-red image may be defined to correspond to various components. For example, a certain part at the left side of the thermal infra-red image corresponds to a driving chain wheel 24, a certain part at the right side corresponds to the drive unit 21, etc., thereby achieving real-time monitoring of the temperatures of a plurality of components by a single temperature detection apparatus.

The temperature detection apparatus may further be associated with a database 26, so as to store running temperature data of various components detected in the database 26. Various mathematical models or computer models may be utilized to analyze previous running temperature data and failure data in the database, and the service life of a component is predicted based on an analysis conclusion, and a precautionary measure is guided, for example, replacing or maintaining a component in advance, improving the structure (for example, heat preservation and heat dissipation structures) of the passenger transport apparatus, etc. In some embodiments, various mathematical models or computer models may be utilized to analyze running temperature data and failure data to set working temperature ranges and pre-determined temperature values of a plurality of components.

In some embodiments, when the temperature of at least one of the plurality of components reaches the corresponding early warning temperature range or exceeds the corresponding working temperature range, the control apparatus judges whether a fire breaks out, if so, then immediately brakes the passenger transport apparatus, and if not, then enables a heat dissipation apparatus to dissipate heat for the component and/or gently brakes the passenger transport apparatus. In the embodiment where the temperature detection apparatus comprises an imaging sensor and/or depth sensing sensor, the control apparatus recognizes whether a fire breaks out by an image transmitted by the imaging sensor and/or depth sensing sensor. In the case where the temperature detection apparatus is an infra-red thermal imager, the control apparatus may judge whether a fire breaks out by recognizing a shape in the thermal imager within a certain region.

In some embodiments, the temperature monitoring system may also be configured to, before the automatic escalator starts, monitor the temperatures of the plurality of components collected by the temperature detection apparatus, and when the temperature of at least one of the plurality of components is lower than a corresponding pre-determined value, the control system sends out a notification message or directly controls a pre-heating apparatus to pre-heat the component, and allows the passenger transport apparatus to start until the temperature of the component reaches the pre-determined value. The start control via the temperature monitoring system avoids cold start of a plurality of components in the case where the temperature is lower than the temperatures which are suitable for their starting. Such cold start may severely affect the service life of a component, for example, cracks may be generated on certain components.

The arrangement position of the temperature detection apparatus may be adaptively adjusted according to components needing to be monitored. With regard to the passenger transport apparatus in different environments, the components needing to be monitored may possibly be different. In generally, the temperature detection apparatus is generally provided at one end or two ends of the passenger transport apparatus, for example, near the top of the two ends. In such a case, the temperature detection apparatus may be integrated into an imaging sensor and/or depth sensing sensor having other monitoring functions. For example, in some embodiments, an imaging sensor and/or depth sensing sensor integrated with an infra-red thermal imager are/is provided near the top of one end or two ends of the passenger transport apparatus. These temperature detection apparatuses may be configured to detect the surface temperatures of a step tread and handrail belts.

In some embodiments, the temperature monitoring system comprises a temperature detection apparatus provided at a lower side of a cover plate of one end or two ends of the passenger transport apparatus, and the temperature detection apparatus is, for example, an infra-red thermal imager. The temperature detection apparatus provided at the lower side of the cover plate of one end or two ends of the passenger transport apparatus is configured to detect the surface temperatures of various components in a drive unit, a transmission system or a control system. The infra-red thermal imager will not be affected by light, and is appropriate to be applied below the cover plate 13 to detect the temperatures of a plurality of components.

In addition to the automatic escalator 100 mentioned above, the temperature monitoring system according to an embodiment of the present invention may further be used in other passenger transport apparatuses, for example, a moving walkway, etc.

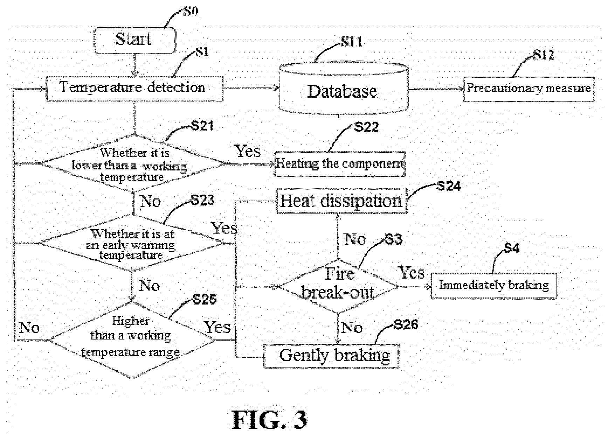

Now refer to Fig. 3, which shows a flow chart of a temperature monitoring method for a passenger transport apparatus according to another embodiment of the present invention. The temperature monitoring method according to an embodiment of the present invention comprises the following steps:
S0, start;
S1, utilizing a temperature detection apparatus to detect the temperatures of a plurality of components of the passenger transport apparatus, wherein the temperature detection apparatus may collect the temperatures of a plurality of components in a contactless manner;

S2, utilizing a control apparatus associated with the temperature detection apparatus to monitor the temperatures of the plurality of components, wherein the step may comprise step S21, judging whether the temperature of at least one of the plurality of components is lower than a corresponding working temperature range, and if so, then performing step S22, sending out a notification message and/or enabling a heating apparatus to heat the component; if not, then performing step S23, judging whether the temperature of at least one of the plurality of components reaches an early warning temperature range, and if so, then performing step S24, the control apparatus sending out a notification message and/or enabling a heat dissipation apparatus to dissipate heat for the component; if not, then performing step S25, judging whether the temperature of at least one of the plurality of components continues to rise and exceeds the corresponding working temperature range, and if so, then performing step S26, sending out a notification message and/or directly enabling the passenger transport apparatus to brake; and if not, then returning to step S1. That is, when a plurality of components are all within the working temperature range, the steps of S1-S2 are repeated to monitor the temperatures of the plurality of components, and this repetition may be performed at certain intervals, such as every 30 seconds, every 1 minute, every 5 minutes, and every 10 minutes.

As an optional embodiment, in steps S23 and S25, if the temperature of any one of the plurality of components is in the early warning temperature range or is higher than the working temperature range, the method continues to proceed to step S3, judging whether a phenomenon of fire break-out happens, and if a phenomenon of fire break-out happens, then step S4 is performed, which needs to immediately brake the passenger transport apparatus to put out the fire, and if the phenomenon of fire break-out does not happen, then step S24, enabling a heat dissipation apparatus to dissipate heat for the component and/or step S26, enabling the passenger transport apparatus to gently brake, are/is performed. Depending on the type of the temperature detection apparatus used, the step of judging whether a fire breaks out may be achieved by recognizing a shape in an infra-red thermal image to judge whether a fire exists, and may also be achieved by recognizing image information transmitted by an imaging sensor and/or depth sensing sensor to judge whether a fire exists.

As an optional embodiment, step S1 further comprises S11, storing the temperature data detected by the temperature detection apparatus in a database and analyzing historical data of the temperature to obtain a relationship between a temperature change and a failure; and S12, predicting a failure based on the currently detected temperature data and the relationship to take a precautionary measure in advance, comprising predicting the service life of the plurality of components and prompting to replace or maintain a plurality of components in time and so on.

It should be understood that all the above preferred embodiments are exemplary rather than limiting, and various modifications or variants made on the specific embodiments described above by those of skills in the art within the concept of the present invention shall all fall within the scope of legal protection of the present invention.

## Claims

1. A temperature monitoring system for a passenger transport apparatus, comprising:
a temperature detection apparatus, configured to detect the temperatures of a plurality of components of the passenger transport apparatus in a contactless manner; and
a control apparatus associated with the temperature detection apparatus, the control apparatus being configured to remotely monitor temperature information about a plurality of components collected by the temperature detection apparatus.

2. The temperature monitoring system according to claim 1, wherein, when the temperature of at least one of the plurality of components is lower than a corresponding working temperature range, the control apparatus sends out a notification message and/or enables a heating apparatus to heat the component; and/or
when the temperature of at least one of the plurality of components reaches a corresponding early warning temperature range, the control apparatus sends out a notification message and/or enables a heat dissipation apparatus to dissipate heat for the component.

3. The temperature monitoring system according to claim 2, wherein when the temperature of at least one of the plurality of components continues to rise after reaching the corresponding early warning temperature range and exceeds the corresponding working temperature range, the control apparatus sends out a notification message and/or enables the passenger transport apparatus to brake.

4. The temperature monitoring system according to any preceding claim, wherein the temperature detection apparatus is provided inside the passenger transport apparatus to collect the temperatures of a plurality of components inside the passenger transport apparatus.

5. The temperature monitoring system according to any preceding claim, wherein the temperature detection apparatus comprises a thermal imager, the thermal imager being able to detect a thermal infra-red image of a certain region in the passenger transport apparatus, and
optionally the thermal imager is integrated with an imaging sensor and/or depth sensing sensor, and/ or
optionally the thermal imager collects a thermal infra-red image of a certain region in the passenger transport apparatus, and defines various positions in the thermal infra-red image to correspond to various components.

6. The temperature monitoring system according to any preceding claim, wherein the temperature detection apparatus is associated with a database, and the database stores temperature data detected by the temperature detection apparatus, and
optionally the control apparatus is further configured to analyze historical temperature data stored in the database to obtain a relationship between a temperature change and a failure of a corresponding component, and predict a failure based on the currently detected temperature data and the relationship to take a precautionary measure in advance.

7. The temperature monitoring system according to any preceding claim, wherein the temperature of at least one of the plurality of components reaches the corresponding early warning temperature range or exceeds the corresponding working temperature range, the control apparatus judges whether a fire breaks out, if so, then immediately brakes the passenger transport apparatus, and if not, then enables the heat dissipation apparatus to dissipate heat for the component and/or gently brakes the passenger transport apparatus, and
optionally the control apparatus recognizes a shape in the thermal infra-red image to judge whether a fire breaks out, and/ or
optionally the monitoring system further comprises an imaging sensor and/or depth sensing sensor, and the control apparatus judges whether a fire breaks out by recognizing an image sensed by the imaging sensor and/or depth sensing sensor.

8. The temperature monitoring system according to any preceding claim, wherein before the passenger transport apparatus starts, the temperature detection apparatus collects the temperatures of the plurality of components, and when the temperature of at least one of the plurality of components is lower than a corresponding pre-determined value, the control apparatus sends out a notification message or directly controls a pre-heating apparatus to pre-heat the component, and allows the passenger transport apparatus to start until the temperatures of the plurality of components reach the pre-determined value.

9. The temperature monitoring system according to any preceding claim, wherein the temperature monitoring system comprises a temperature detection apparatus provided near the top of one end or two ends of the passenger transport apparatus, and
optionally the temperature detection apparatus provided near the top of one end or two ends of the passenger transport apparatus detects the temperatures of a step tread and a handrail belt.

10. The temperature monitoring system according to any preceding claim, wherein the temperature monitoring system comprises a temperature detection apparatus provided at a lower side of a cover plate of one end or two ends of the passenger transport apparatus, and
optionally the temperature detection apparatus provided at a lower side of a cover plate of one end or two ends of the passenger transport apparatus detects the temperatures of a plurality of components of a drive unit, a transmission system or a control system.

11. A passenger transport apparatus, wherein the passenger transport apparatus comprises the temperature monitoring system as claimed in any one of claims 1 to 10.

12. A temperature monitoring method for a passenger transport apparatus, wherein the method comprises the following steps:
utilizing a temperature detection apparatus to detect the temperatures of a plurality of components of the passenger transport apparatus in a contactless manner; and
remotely monitoring the temperatures of the plurality of components.

13. The method according to claim 12, wherein the method further comprises:
when the temperature of at least one of the plurality of components is lower than a corresponding working temperature range, sending out a notification message and/or enabling a heating apparatus to heat the component; and/or
when the temperature of at least one of the plurality of components reaches an early warning temperature range, the control apparatus sending out a notification message and/or enabling a heat dissipation apparatus to dissipate heat for the component; and
optionally the method further comprises:
when the temperature of at least one of the plurality of components reaches the early warning temperature range and continues to rise and exceeds the corresponding working temperature range, the control apparatus sending out a notification message and/or enabling the passenger transport apparatus to brake.

14. The method according to claim 12 or 13, wherein the temperature detection apparatus comprises a thermal imager, and the method further comprises:
utilizing the thermal imager to collect a thermal infra-red image of a certain region in the passenger transport apparatus; and
defining various positions in the thermal infra-red image to correspond to various components, thereby monitoring the temperatures of the plurality of components by monitoring the thermal infra-red image; and
optionally the method further comprises:
storing temperature data of a plurality of components detected by the temperature detection apparatus in a database;
analyzing historical temperature data stored in the database to obtain a relationship between a temperature change and a failure of a corresponding component; and
predicting a failure based on the currently detected temperature data and the relationship to take a precautionary measure in advance.

15. The method according to any one of claims 12-14, wherein the method further comprises:
when the temperature of at least one of the plurality of components reaches the corresponding early warning temperature range or exceeds the corresponding working temperature range, judging whether a fire breaks out, if so, then immediately braking the passenger transport apparatus, and if not, then enabling a heat dissipation apparatus to dissipate heat for the component and/or gently braking the passenger transport apparatus; and
optionally the method further comprises judging whether a fire breaks out by recognizing a shape in the thermal infra-red image; and/ or
optionally the method further comprises judging whether a fire breaks out by recognizing image information sensed by an imaging sensor and/or depth sensing sensor.
